# EUROPEAN PATENT SPECIFICATION

(11) **EP 0 613 320 B1**
(45) Date of publication and mention of the grant of the patent: **14.01.1998**
(21) Application number: 94108031.9
(22) Date of filing: 14.03.1990
(51) Int. Cl.: H04R 5/033, H04B 10/10

(54) **Wireless headphones**
Drahtlose Kopfhörer
Ecouteur sans fil

(30) Priority: 20.03.1989 JP 67923/89
(43) Date of publication of application: 31.08.1994
(62) Divisional of application: 90302741.5
(73) Proprietor: SONY CORPORATION, Tokyo 141 (JP)
(72) Inventor: Abe, Kensaku, c/o Intellectual Property Div., Shinagawa-ku, Tokyo 141 (JP)
(74) Representative: Turner, James Arthur

(56) References cited:
- EP-A- 0 207 691
- US-A- 4 229 829
- US-A- 4 710 693

## Description

This invention relates to wireless headphones.

A wireless headphone system has recently been proposed in which a signal is transmitted by means of infra-red rays from a transmitter, and is received by the headphones at a position distant from the transmitter.

Japanese Laid-Open Patent Application No. JP-A-55-82596 discloses such a wireless headphone system in which the usable range of the headphone is not limited by a headphone cord, unlike previous headphone systems. Further, infra-red rays are utilised to prevent the wireless headphone from interfering with other types of radiation such as radio waves. An infra-red signal light transmitted from the transmitter is received by a light receiving element provided on a top portion of a head band portion of the wireless headphone. An output signal from the light receiving element is demodulated and reproduced by an amplifier, a demodulating circuit and a reproducing circuit powered by a power supply source such as a secondary battery or the like incorporated within the headphone, and is then fed to a headphone unit portion. Thus the headphone unit portion can derive the reproduced output as an audible signal, transmitted from the transmitter.

A problem exists that charging terminals for the secondary battery within the headphones can become contaminated by hair, skin or oily components from the listener's head. This can lead to corrosion and poor contact in the charging operation.

US-A-4 710 693 discloses a charging draw having sprung contacts for connecting to exposed charging terminals on a rechargeable headphone device.

US-A-4 229 829 discloses a headphone charging arrangement using inductive coupling of the charging power.

This invention provides a wireless headphone comprising a change-over switch provided in the headphone body for changing between operable and inoperable states of the wireless headphone;
characterised by:
charging terminals for charging a secondary battery incorporated within a headphone body, the charging terminals being provided on the headphone body at positions in which they would contact the listener's head when the listener is wearing the wireless headphone; and
closing means for closing the charging terminals in a ganged relation to the change-over operation of the change-over switch when switching the wireless headphone to the operable state.

The invention will now be described by way of example with reference to the accompanying drawings, throughout which like parts are referred to by like references, and in which:
Figure 1 is a schematic perspective view illustrating a wireless headphone system according to an embodiment of the present invention;
Figure 2 is a front view of a wireless headphone of the system shown in Figure 1, illustrating the headphone in partly cut-away fashion;
Figure 3 is a rear view of the wireless headphone of Figure 2;
Figure 4 is a side view of the wireless headphone of Figures 2 and 3 from the right-hand side;
Figure 5 is a perspective view illustrating the wireless headphone being charged;
Figure 6 is an enlarged longitudinal partly sectional diagrammatic view of one portion of the wireless headphone; and
Figures 7A to 7C and Figures 8A to 8C are schematic diagrams to which reference will be made in explaining the arrangement and operation of a charging terminal portion of the wireless headphone.

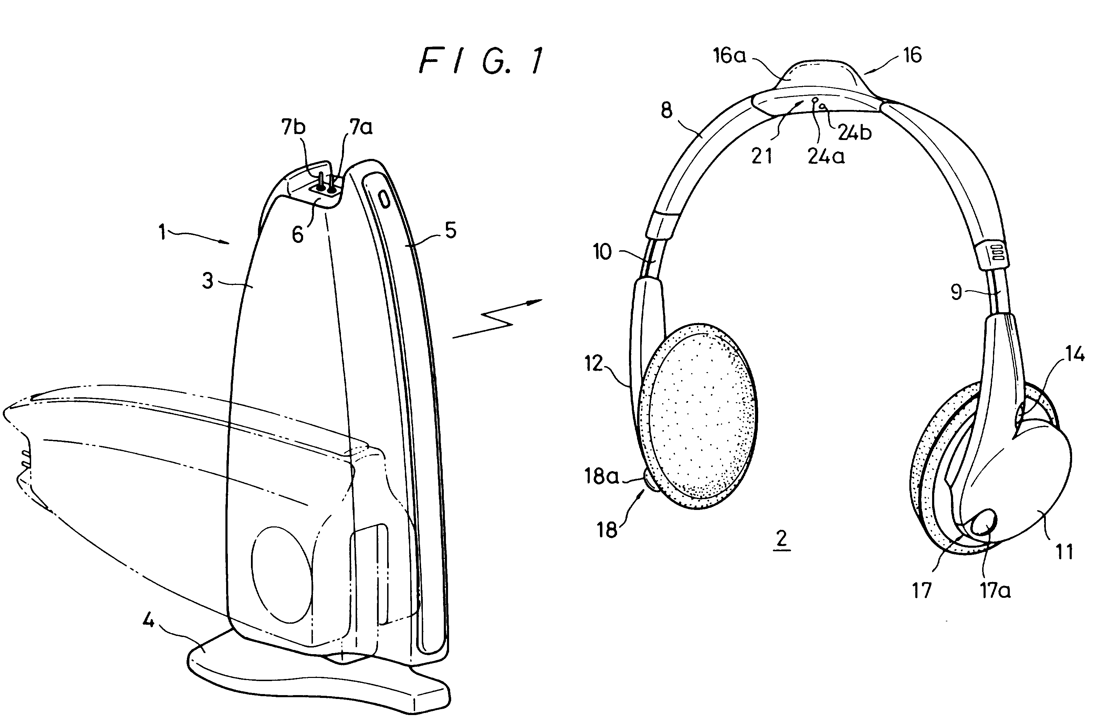

Figure 1 illustrates a wireless headphone system embodying the present invention. Referring to Figure 1, there is shown a transmitter 1 and a wireless headphone 2, wherein an infra-red transmitted signal from the transmitter 1 is received by the wireless headphone 2 which reproduces the received light signal as an output audio signal. In this wireless headphone system, the wireless headphone is driven by a secondary (rechargeable) battery (not shown), and this secondary battery is recharged by a charging function of the transmitter 1 as will be described later.

As shown in Figure 1, the transmitter 1 comprises a transmitter body 3 and a leg or base 4 which supports the transmitter body 3. An audio signal supplied to the transmitter body 3 from an audio apparatus or the like is used to modulate infra-red rays in a predetermined manner and hence the audio signal is converted to an infra-red transmission signal. This infra-red transmission signal is emitted from a front light transmitting portion 5 of the transmitter 1. The transmitter body 3 is arranged to be rotatable relative to the base 4, whereby the direction or angle in which the transmission signal is transmitted can be freely varied.

The transmitter body 3 can also serve as a charging apparatus which charges the secondary battery incorporated within the wireless headphone 2. To this end, supply terminals 7a and 7b project from a concave portion 6 of a recess shape formed on the upper end portion of the transmitter body 3 as output terminals of this charging apparatus. An input cord for an audio signal and a power supply cord (neither being shown) respectively connect the transmitter body 3 to the audio apparatus and the power supply source.

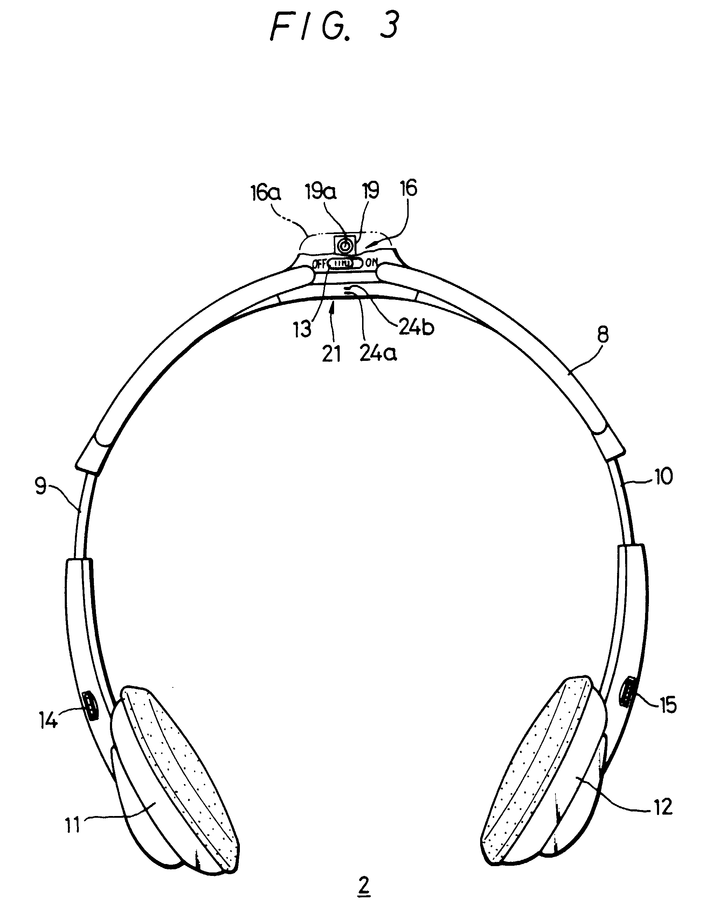

The wireless headphone 2 comprises a head band portion 8 and a pair of headphone unit portions 11 and 12 supported to the two end portions of the head band portion 8 by means of hanger portions 9 and 10. The headphone unit portions 11 and 12 incorporate respective speakers (not shown). As shown in Figure 3, a slidable switch knob 13 is provided for turning on the power supply source of the headphone. The headphone also includes dials 14 and 15 which are used to adjust sound volume.

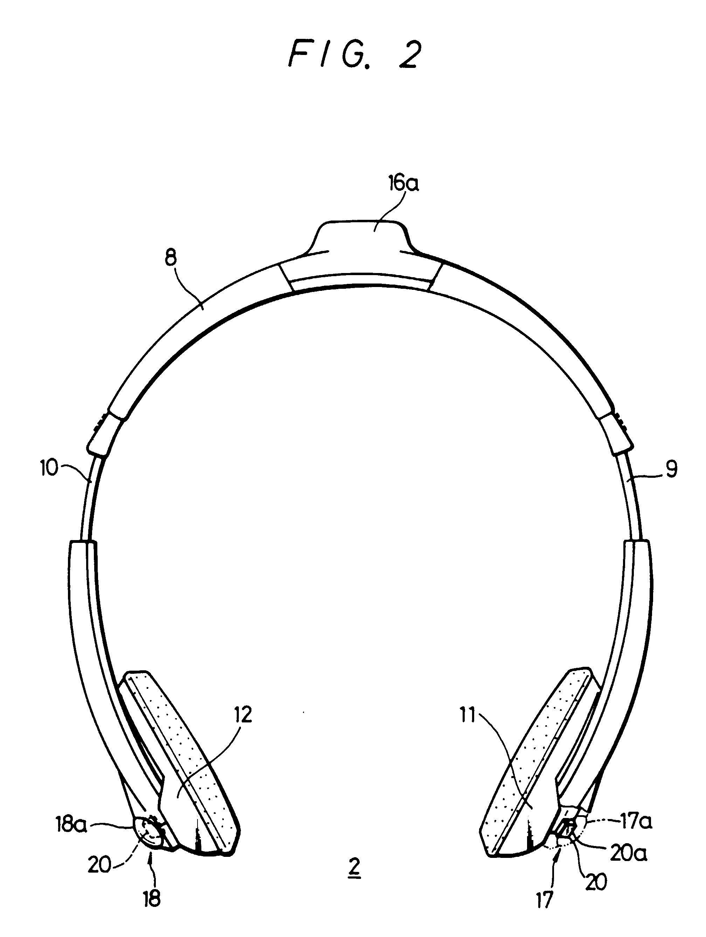

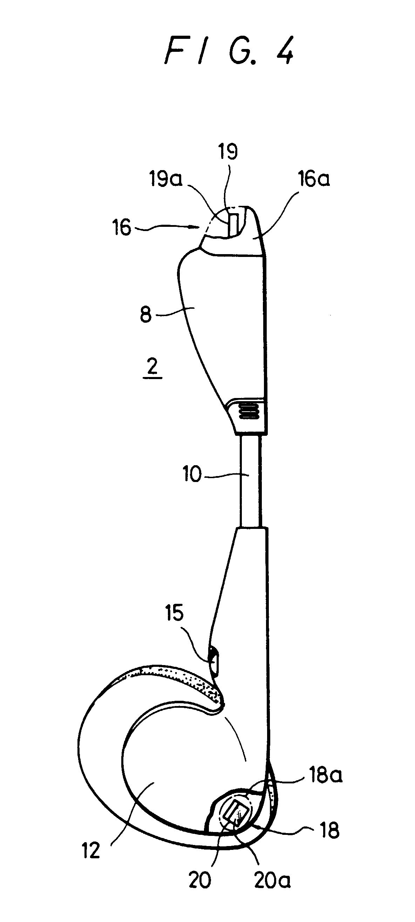

As will be clear from Figures 2 to 4, the wireless headphone 2 is provided at three portions (specifically the central top portion of the head band portion 8 and front side portions of the left and right headphone unit portions 11 and 12) with respective light receiving portions 16, 17 and 18. The light receiving portions 16, 17 and 18 are respectively covered with filter caps 16a, 17a and 18a which are transparent only to infra-red rays.

The light receiving portion 16 provided on the top portion of the head band portion 8 includes a first receiving element 19 whose light receiving surface 19a is directed rearward and which can thus receive a transmitted signal supplied thereto from the rear. The light receiving portions 17 and 18 of the headphone unit portions 11 and 12 respectively include second light receiving elements 20, each of the light receiving elements 20 having a light receiving surface 20a which is oriented in a direction different from that of the first light receiving element 19, specifically in the front downward direction, so as to receive a transmitted signal from the front side. If any one of the light receiving elements 19 and 20 of the three light receiving portions 16, 17 and 18 receives the transmitted signal, the received signal is demodulated to provide an audio signal, and this audio signal is reproduced by the headphone unit portions 11 and 12 as an audio sound.

The wireless headphone system is constructed as described above so that, even when the listener wearing the headphone turns the head in any direction, any one of the three light receiving portions 16, 17 and 18 can receive the transmitted signal, thus making it possible to maintain satisfactory reception.

The wireless headphone preferably utilises a secondary battery as its drive power source as described above (the secondary battery may be accommodated, for example, within the headphone unit 11 or 12, although this is not shown), and a rechargeable battery terminal portion 21 is provided at the central portion of the head band portion 8 for recharging this secondary battery.

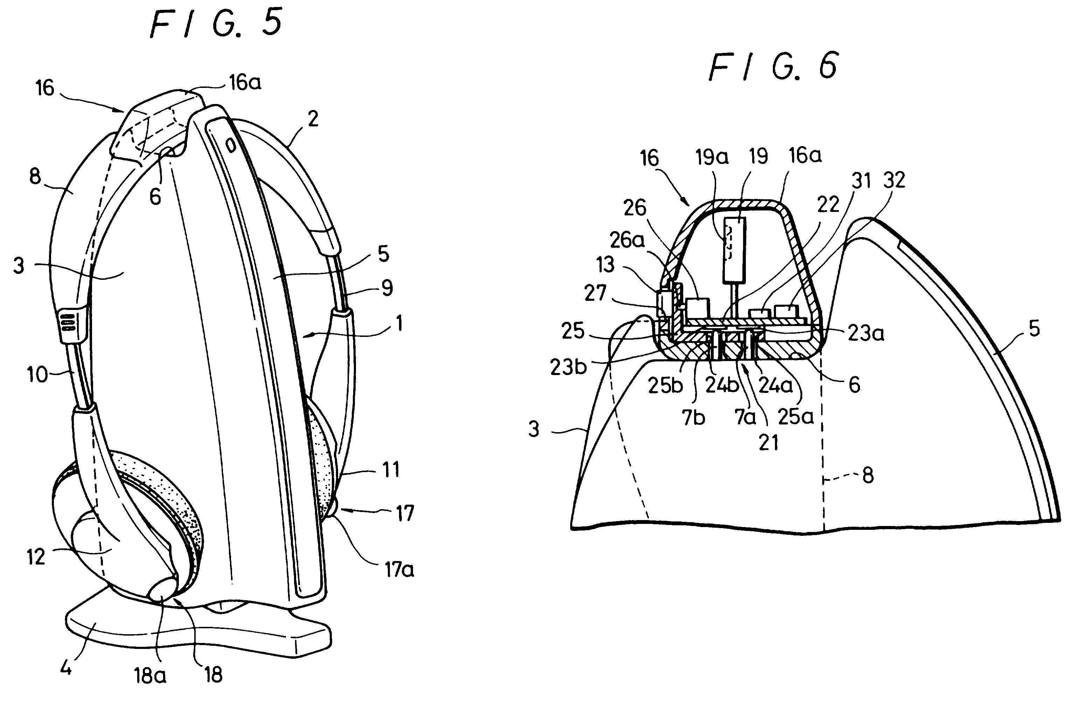

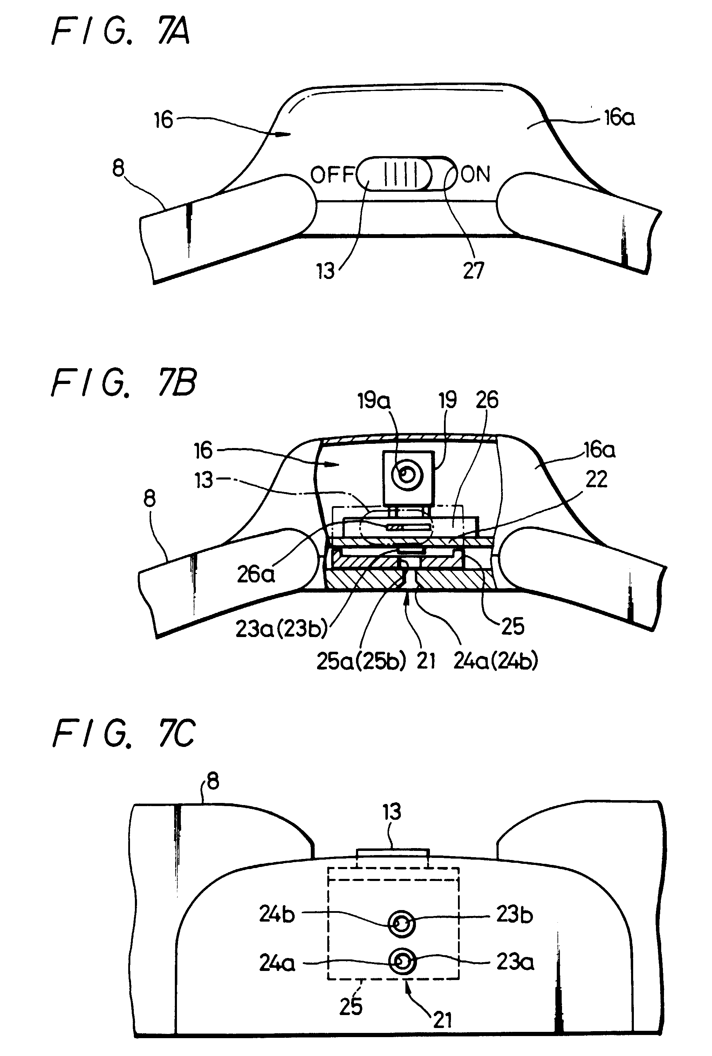

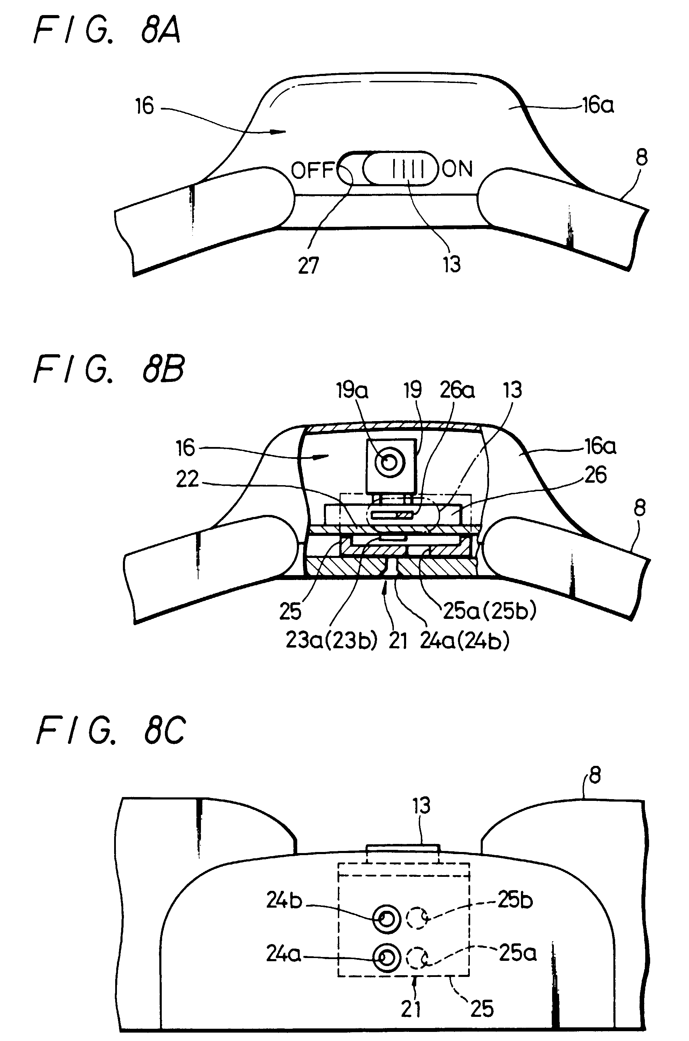

More specifically, as shown in Figure 6, electronic circuits 31 and 32 such as an amplifying circuit and the like are incorporated within the filter cap 16a on the top portion of the head band portion 8. Also, a circuit board 22 is located within the filter cap 16a so as to support thereon the first light receiving element 19. On the lower side surface of the circuit board 22, there are formed charging terminals 23a and 23b as input terminals for the secondary battery. In association with the charging terminals 23a and 23b, through-holes 24a and 24b are formed in the lower wall of the head band portion 8 at its central portion.

Upon charging, as shown in Figures 5 and 6, the central portion of the head band portion 8 of the wireless headphone 2 is placed in the recess concave portion 6 of the transmitter body 3, and the supply terminals 7a, 7b of the transmitter body 3 are inserted into the through-holes 24a and 24b, whereby the tops of the supply terminals 7a and 7b are respectively connected to the charging terminals 23a and 23b. If the charging circuit (not shown) provided within the transmitter body 3 is automatically or manually operated under this condition, then a current is supplied to the secondary battery incorporated within the wireless headphone 2 from the supply terminals 7a and 7b through the charging terminals 23a and 23b, and charging is effected. In the charging operation, the direction of the wireless headphone 2 placed in the recess concave portion 6 of the transmitter body 3 may be as shown in Figure 5 or may be reversed. In other words, the charging operation can be effected regardless of the polarities of the supply terminals 7a, 7b and the charging terminals 23a, 23b.

In the charging terminal portion 21 of the wireless headphone 2, an opening and closing plate member 25 is provided between the charging terminals 23a, 23b and the through-holes 24a, 24b so as to open and close access to the charging terminals 23a, 23b. The opening and closing plate member 25 is operated in a ganged relation with the switching operations of the power supply source of the wireless headphone 2. Specifically, a slide switch 26 for selectively turning on and off the power supply source of the wireless headphone 2 is secured to the circuit board 22, and the opening and closing plate member 25 is coupled at a vertical surface portion formed on one end thereof to a slide contact 26a of the slide switch 26. The switch knob 13 is formed integrally with the vertical surface portion of the opening and closing plate member 25 and is exposed to the exterior through a rectangular opening 27 bored through the filter cap 16a. When the switch knob 13 is moved to the right or left, the slide switch 26 is actuated to change over the operating condition of the wireless headphone 2, namely to turn on or off the power supply source, and simultaneously, the opening and closing plate member 25 is moved to the right or left.

Through-holes 25a and 25b are bored through the opening and closing plate member 25 so that, when the switch knob 13 is in the off position, that is when the wireless headphone 2 is in the inoperable state, the through-holes 25a, 25b respectively communicate with the through-holes 24a, 24b. Thus, the charging terminals 23a and 23b are exposed, thereby making possible the recharging of the secondary battery (see Figures 7A, 7B and 7C).

When the switch knob 13 is moved to the on position, that is when the wireless headphone 2 is in the operable state, the through-holes 25a, 25b do not communicate with the through-holes 24a, 24b by virtue of the movement of the opening and closing plate member 25. Thus, the charging terminals 23a and 23b are concealed by the opening and closing plate member 25 (see Figures 8A, 8B and 8C). Therefore, in this state, even when the listener wears the wireless headphone 2, the charging terminals 23a and 23b will be prevented from contacting the listener's hair.

In the wireless headphone 2 of this embodiment, the three light receiving portions 16, 17 and 18 for receiving the infra-red signal transmitted from the transmitter 1 are respectively provided on the top portion of the head band portion 8 and on the respective headphone unit portions 11 and 12 so that, even when any of the light receiving portions is hidden in use, other light receiving portions can satisfactorily receive the transmitted signal from the transmitter 1. Further, the light receiving portion 16 provided on the top portion of the head band portion 8 includes the light receiving element 19 whose light receiving surface 19a is directed rearwards and the light receiving portions 17 and 18 of the two headphone units 11 and 12 include the light receiving elements 20 whose light receiving surfaces 20a are directed to the right and left front directions so that, even when the transmitted signal reaches the wireless headphone 2 from any direction, this transmitted signal can be positively received by any one of the light receiving elements 19 and 20. Therefore, regardless of the direction of the listener's head wearing the wireless headphone 2, a satisfactory receiving condition can be always maintained.

Furthermore, in accordance with this embodiment, the second light receiving elements 20 provided in the headphone units 11 and 12 are arranged to orient their light receiving surfaces 20a in the lower front directions so that the wireless headphone system can satisfactorily receive the transmitted signal from the transmitter 1, particularly when the user wears the wireless headphone 2 while lying down.

While one embodiment of the present invention is described above, various modifications are possible, for example as follows. For example, while the light receiving surface 19a of the first light receiving element 19 provided on the top portion of the head band portion 8 is directed rearwards and the light receiving surfaces 20a of the second light receiving elements 20 provided on the headphone unit portions 11 and 12 are directed forwards in the aforementioned embodiment, this arrangement may be reversed; namely, the light receiving surface 19a of the first light receiving element 19 may be directed forwards and the light receiving surfaces 20a of the second light receiving elements 20 may be directed rearwards.

As set out above, the head band portion is provided at its top portion with the first light receiving element whose light receiving surface is directed in one direction and at least one of the left and right headphone unit portions is provided with the second light receiving element whose light receiving surface is directed in the direction different from that of the first light receiving element so that, even when any of the light receiving elements is hidden by hair or the like, the transmitted signal can be received by an or the other light receiving element. Further, even when the listener's head is directed in any direction, the transmitted signal can be positively received by at least one of the light receiving elements. Therefore, regardless of the condition of the head of the listener, satisfactory reception can always be maintained.

Furthermore, the charging terminals are selectively closed in a ganged relation with the operation of the switch which selectively switches the operation of the wireless headphone so that, when the listener is wearing this wireless headphone, hair and skin from the head can be prevented from contacting the charging terminals. Thus, the charging terminals can be protected from being contaminated by oily components or the like. Hence, the charging terminals can be protected from corrosion and poor contact in the charging operation can be avoided.

## Claims

1. A wireless headphone comprising a change-over switch (26) provided in the headphone body for changing between operable and inoperable states of the wireless headphone (2);
characterised by:
charging terminals (23a, 23b) for charging a secondary battery incorporated within a headphone body, the charging terminals (23a, 23b) being provided on the headphone body at positions in which they would contact the listener's head when the listener is wearing the wireless headphone (2); and
closing means (13, 25) for closing the charging terminals (23a, 23b) in a ganged relation to the change-over operation of the change-over switch (26) when switching the wireless headphone (2) to the operable state.

2. A wireless headphone according to claim 1, wherein the charging terminals (23a, 23b) are provided on an inner surface side of a head band portion (8) of the headphone body.

3. A wireless headphone according to claim 1 or claim 2, wherein the closing means comprises a switch knob (13) which is slidably provided on the headphone body to operate the change-over switch (26).

## Patentansprüche

1. Drahtloser Kopfhörer mit einem Wechselschalter (26), der in dem Kopfhörer-Körper vorgesehen ist, um zwischen einem Betriebszustand und einem Nicht-Betriebszustand des drahtlosen Kopfhörers umzuschalten,
**gekennzeichnet durch**
Ladeanschlüsse (23a, 23b) zum Laden einer Sekundärbatterie, die innerhalb eines Kopfhörer-Körpers eingebaut ist, wobei die Ladeanschlüsse (23a, 23b) an dem Kopfhörer-Körper an Positionen vorgesehen sind, an denen sie den Kopf des Hörers berühren, wenn der Hörer den drahtlosen Kopfhörer (2) trägt, und
eine Verschlußeinrichtung (13, 25) zum Schließen der Ladeanschlüsse (23a, 23b) in Zusammenwirkung mit dem Umschaltvorgang des Wechselschalters (26), wenn der drahtlose Kopfhörer (2) in den Betriebszustand geschaltet wird.

2. Drahtloser Kopfhörer nach Anspruch 1,
bei dem die Ladeanschlüsse (23a, 23b) an einer Innenseite eines Kopfbandabschnittes (8) des Kopfhörer-Gehäuses vorgesehen sind.

3. Drahtloser Kopfhörer nach Anspruch 1 oder 2,
bei dem die Schließeinrichtung einen Schaltknopf (13) aufweist, der verschiebbar an dem Kopfhörer-Gehäuse zur Betätigung des Wechselschalters (26) vorgesehen ist.

## Revendications

1. Un casque audio sans fil comprenant un commutateur (26) qui est incorporé dans le corps du casque pour commuter entre des états de fonctionnement et de non-fonctionnement du casque audio sans fil (2);
caractérisé par :
des bornes de charge (23a, 23b) pour charger une batterie d'accumulateurs qui est incorporée à l'intérieur d'un corps de casque, les bornes de charge (23a, 23b) étant disposées sur le corps de casque dans des positions dans lesquelles elles viendraient en contact avec la tête de l'auditeur lorsque l'auditeur porte le casque audio sans fil (2); et
des moyens de fermeture (13, 25) pour fermer les bornes de charge (23a, 23b) en liaison avec l'opération de commutation du commutateur (26), au moment de la commutation du casque audio sans fil (2) vers l'état de fonctionnement.

2. Un casque audio sans fil selon la revendication 1, dans lequel les bornes de charge (23a, 23b) sont disposées sur un côté de surface intérieure d'une partie de serre-tête (8) du corps de casque.

3. Un casque audio sans fil selon la revendication 1 ou la revendication 2, dans lequel les moyens de fermeture comprennent un bouton de commutateur (13) qui est monté de façon glissante sur le corps de casque pour actionner le commutateur (26).
